# EUROPEAN PATENT SPECIFICATION

(11) **EP 3 095 201 B1**
(45) Date of publication and mention of the grant of the patent: **25.03.2026**
(21) Application number: 15701614.8
(22) Date of filing: 08.01.2015
(51) Int. Cl.: H04B 7/04, H01Q 3/24

(54) **REDUCING POWER CONSUMPTION AT A TRANSCEIVER**
VERRINGERUNG DES ENERGIEVERBRAUCHS EINER SENDE-/EMPFANGSVORRICHTUNG
RÉDUCTION DE CONSOMMATION D'ÉNERGIE DANS UN ÉMETTEUR-RÉCEPTEUR

(30) Priority: 17.01.2014 US 201414158337
(43) Date of publication of application: 23.11.2016
(73) Proprietor: Qualcomm Incorporated, San Diego, CA 92121-1714 (US)
(72) Inventor: WEISSMAN, Haim Mendel, San Diego, California 92121-1714 (US); BURRA, Gangadhar, San Diego, California 92121-1714 (US); RAVIV, Lior, San Diego, California 92121-1714 (US); TSFATY, Yossef, San Diego, California 92121-1714 (US)
(74) Representative: Carstens, Dirk Wilhelm
(86) International application number: PCT/US2015/010568
(87) International publication number: WO 2015/108745

(56) References cited:
- US-A1- 2007 224 951
- US-A1- 2011 065 400
- US-A1- 2012 099 474
- US-A1- 2013 266 085

## Description

### FIELD

The present disclosure is generally related to reducing power consumption.

### DESCRIPTION OF RELATED ART

Advances in technology have resulted in smaller and more powerful computing devices. For example, there currently exist a variety of portable personal computing devices, including wireless computing devices, such as portable wireless telephones, personal digital assistants (PDAs), and paging devices that are small, lightweight, and easily carried by users. More specifically, portable wireless telephones, such as cellular telephones and Internet protocol (IP) telephones, can communicate voice and data packets over wireless networks. Further, many such wireless telephones include other types of devices that are incorporated therein. For example, a wireless telephone can also include a digital still camera, a digital video camera, a digital recorder, and an audio file player. Also, such wireless telephones can process executable instructions, including software applications, such as a web browser application, that can be used to access the Internet. As such, these wireless telephones can include significant computing capabilities.

Wireless telephones may include transceivers that are operable to receive and transmit signals using a wireless network. For example, the wireless network may include arrays having multiple antennas for enhanced transmission capability, such as using beamforming to overcome path loss and to increase a signal-to-noise ratio of the received signals. Each multiple antenna array may include a large number of radio frequency (RF) components (e.g., low noise amplifiers, power amplifiers, mixers, etc.) that consume a relatively large amount of power during operation.
Attention is drawn to US 2013/266085 A1 describing multiple-input multiple-output (MIMO) with multiple power amplifiers and antennas in a mobile transmitter, such as a user equipment for a cellular telephone communication system, has such great impacts on the transmitter's battery life, form factor, and complexity that it should not be used unless its benefits clearly outweigh its costs. Methods and apparatus enable the benefits of MIMO by beam-forming and antenna-switching to be obtained without incurring the drawbacks of increased current consumption due to multiple power amplifiers.
Attention is also drawn to US 2011/065400 A1 describing an apparatus comprising an antenna switch configured to select at least one antenna, and a controller. The controller is configured to control the antenna switch in a first mode of operation and a second mode of operation. The first mode of operation is where the apparatus is configured to communicate with a further apparatus. The second mode of operation is where the apparatus is configured to perform a direction finding.
Attention is further drawn to US 2007/224951 A1 describing a radio frequency transmitter has a plurality of digitally controlled phased array antennas coupled to and controlled by the processor to transmit data. The processor is to enable one or more antennas to be turned off during a use of the apparatus to reduce a power consumption of the apparatus.
Attention is further drawn to US 2012/099474 A1 describing an antenna diversity system comprising a diversity transmitter having a plurality of transmitter-side antennas, the diversity transmitter being arranged to generate at least one sequence of signals, and a receiver comprising a first receiver-side antenna, the receiver being arranged to successively receive the signals of the at least one sequence on the first receiver-side antenna, and to suspend receiving of subsequent signals of the at least one sequence when an error check of a data packet comprised in a received signal of the at least one sequence indicates a successful reception.
In accordance with the present invention an apparatus and a method, as set forth in the independent claims, respectively, are provided. Preferred embodiments of the invention are described in the dependent claims.

### BRIEF DESCRIPTION OF THE DRAWINGS

FIG. 1 shows a wireless device communicating with a wireless system;
FIG. 2 is a block diagram that depicts an exemplary embodiment of a system that is operable to reduce power consumption at a transceiver;
FIG. 3 is a graph that illustrates the effects of selectively reducing an amount of current provided to power amplifiers and selectively disabling use of antennas at a transceiver according to the system of FIG. 1;
FIG. 4 is a flowchart that illustrates an exemplary embodiment of a method for reducing power consumption at a transceiver;
FIG. 5 is a flowchart that illustrates an exemplary embodiment of a method for reducing power consumption at a transceiver;
FIG. 6 is a flowchart that illustrates another embodiment of a method for reducing power consumption at a transceiver; and
FIG. 7 is a flowchart that illustrates another embodiment of a method for reducing power consumption at a transceiver.

### DETAILED DESCRIPTION

The detailed description set forth below is intended as a description of exemplary designs of the present disclosure and is not intended to represent the only designs in which the present disclosure can be practiced. The term "exemplary" is used herein to mean "serving as an example, instance, or illustration." Any design described herein as "exemplary" is not necessarily to be construed as preferred or advantageous over other designs. The detailed description includes specific details for the purpose of providing a thorough understanding of the exemplary designs of the present disclosure. It will be apparent to those skilled in the art that the exemplary designs described herein may be practiced without these specific details. In some instances, well-known structures and devices are shown in block diagram form in order to avoid obscuring the novelty of the exemplary designs presented herein.

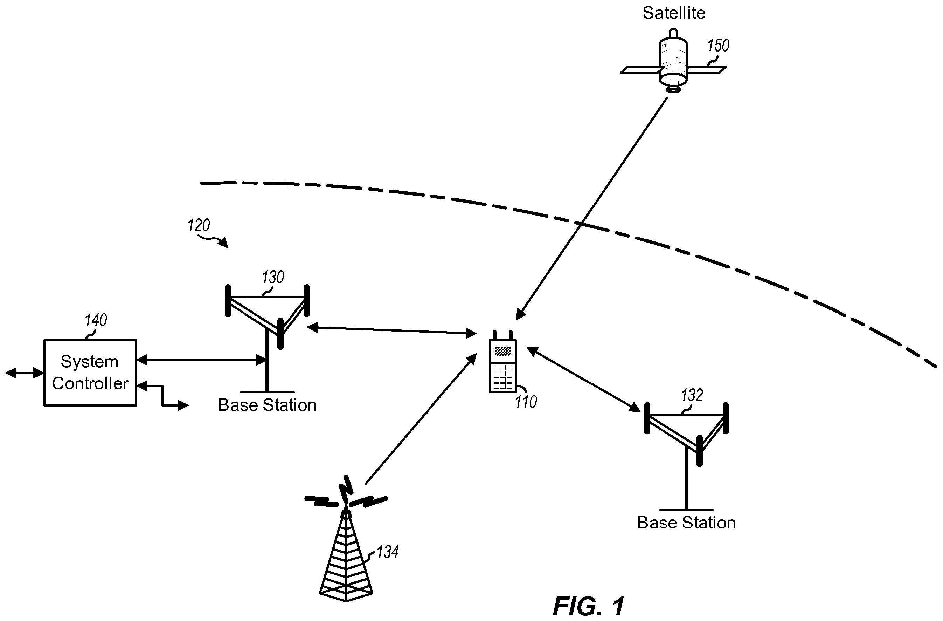

FIG. 1 shows a wireless device 110 communicating with a wireless communication system 120. Wireless communication system 120 may be a Long Term Evolution (LTE) system, a Code Division Multiple Access (CDMA) system, a Global System for Mobile Communications (GSM) system, a wireless local area network (WLAN) system, or some other wireless system. A CDMA system may implement Wideband CDMA (WCDMA), CDMA 1X, Evolution-Data Optimized (EVDO), Time Division Synchronous CDMA (TD-SCDMA), or some other version of CDMA. For simplicity, FIG. 1 shows wireless communication system 120 including two base stations 130 and 132 and one system controller 140. In general, a wireless system may include any number of base stations and any set of network entities.

Wireless device 110 may also be referred to as a user equipment (UE), a mobile station, a terminal, an access terminal, a subscriber unit, a station, etc. Wireless device 110 may be a cellular phone, a smartphone, a tablet, a wireless modem, a personal digital assistant (PDA), a handheld device, a laptop computer, a smartbook, a netbook, a cordless phone, a wireless local loop (WLL) station, a Bluetooth device, etc. Wireless device 110 may communicate with wireless communication system 120. Wireless device 110 may also receive signals from broadcast stations (e.g., a broadcast station 134), signals from satellites (e.g., a satellite 150) in one or more global navigation satellite systems (GNSS), etc. Wireless device 110 may support one or more radio technologies for wireless communication such as LTE, WCDMA, CDMA 1X, EVDO, TD-SCDMA, GSM, 802.11, etc.

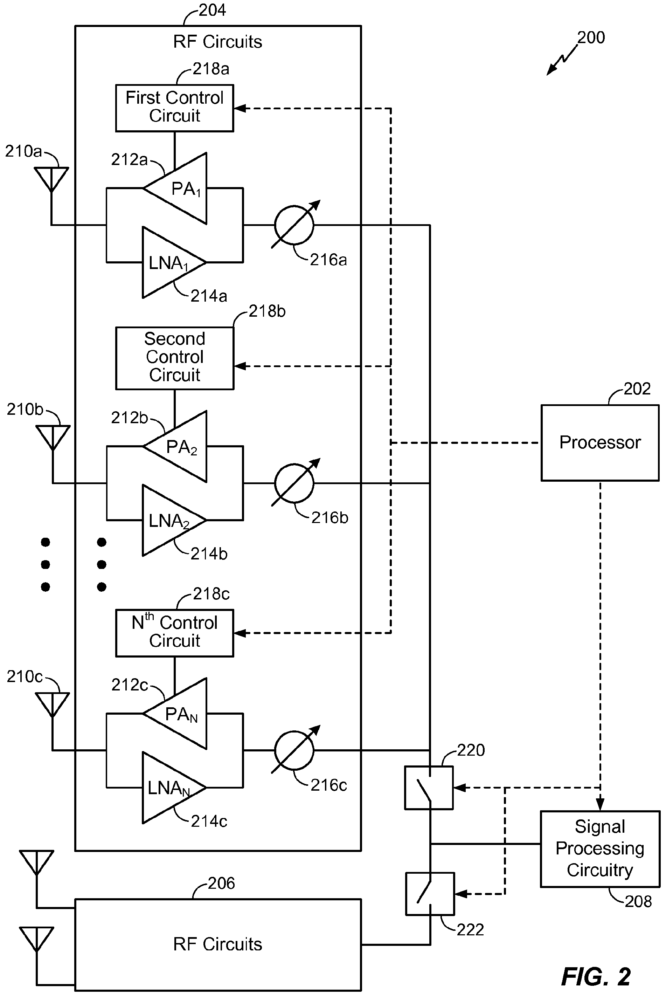

Referring to FIG. 2, an exemplary illustrative embodiment of a system 200 that is operable to reduce power consumption at a transceiver is shown. The system 200 includes a processor 202 (e.g., a dynamic power controller), radio frequency (RF) circuits 204, 206, and signal processing circuitry 208. The system 200 may correspond to, or may be included within, a mobile device. For example, the mobile device may correspond to a mobile phone, a laptop computer, a tablet, a music player, a video player, an entertainment unit, a navigation device, a communications device, a personal digital assistant (PDA), etc. In an exemplary embodiment, the system 200 may include a millimeter (mm) frequency system (e.g., a 60 gigahertz (GHz) radio frequency integrated circuit (RFIC)) used in accordance with industry standards, such as Institute of Electrical and Electronics Engineers (IEEE) 802.11ad.

The processor 202 may be coupled to components of the RF circuits 204, 206, and to components of the signal processing circuitry 208 to dynamically reduce power consumption, as described below. The processor 202 may be configured to execute instructions. As illustrated in FIG. 2, connections associated with the processor 202 are shown using dotted lines.

A first antenna 210a, a second antenna 210b, and an N^{th} antenna 210c may be coupled to the RF circuits 204, where N corresponds to any integer that is greater than one. As a non-limiting example, if N is equal to seven, the RF circuits 204 would be coupled to seven antennas. Each antenna 210a-210c may be coupled to a corresponding power amplifier (PA) 212a-212c and to a corresponding low noise amplifier (LNA) 214a-214c. For example, the first antenna 210a may be coupled to a first power amplifier (PA₁) 212a and to a first low noise amplifier (LNA₁) 214a, the second antenna 210b may be coupled to a second power amplifier (PA2) 212b and to a second low noise amplifier (LNA₂) 214b, and the N^{th} antenna 210c may be coupled to an N^{th} power amplifier (PA_{N}) and to an N^{th} low noise amplifier (LNA_{N}) 214c.

Each power amplifier 212a-212c may be configured to amplify signals to be transmitted over a wireless network (not shown) via the corresponding antenna 210a-210c. Each low noise amplifier 214a-214c may be configured to amplify and improve the gain of signals received from the wireless network via the corresponding antenna 210a-210c. The first antenna 210a may be coupled to transmit and receive signals with respect to a first direction, the second antenna 210b may be coupled to transmit and receive signals with respect to a second direction, and the N^{th} antenna 210c may be coupled to transmit and receive signals with respect to a third direction.

A first phase shifter 216a may be coupled to the first power amplifier 212a and to the first low noise amplifier 214a, a second phase shifter 216b may be coupled to the second power amplifier 212b and to the second low noise amplifier 214b, and an N^{th} phase shifter 216c may be coupled to the N^{th} power amplifier 212c and to the N^{th} low noise amplifier 214c. Each phase shifter 216a-216c may steer a corresponding beam in a beam-forming operation.

A first control circuit 218a (e.g., a first bias register) may be coupled to the first power amplifier 212a, a second control circuit 218b (e.g., a second bias register) may be coupled to the second power amplifier 212b, and an N^{th} control circuit 218c (e.g., an Nth bias register) may be coupled to the N^{th} power amplifier 212c. In an exemplary embodiment, the first control circuit 218a, the second control circuit 218b, and the N^{th} control circuit 218c may be implemented as a single control circuit. Each control circuit 218a-218c may be configured to adjust (e.g., increase or decrease) an amount of current provided to the corresponding power amplifier 212a-212c based on a digital code (e.g., control signals) provided by the processor 202. Reducing (e.g., decreasing) the current provided to the power amplifiers 212a-212c reduces an amount of power consumed at the system 200.

Each control circuit 218a-218c may also selectively "turn on" each power amplifier 212a-212c, and thus selectively enable use of the corresponding antenna 210a-210c (e.g., couple the antenna 210a-210c to the signal processing circuitry 208). In addition, each control circuit 218a-218c may selectively "turn off" use of each power amplifier 212a-212c, and thus selectively disable use of the corresponding antenna 210a-210c (e.g., decouple the antenna 210a-210c from the signal processing circuitry 208). Disabling use of an antenna 210a-210c reduces an amount of power consumed at the system 200. The control circuits 218a-218c may also be coupled to the corresponding LNAs 214a-214c to selectively enable (or disable) the LNAs 214a-214c.

As illustrated in FIG. 2, the RF circuits 204 include power amplifiers 212a-212c, low noise amplifiers 214a-214c, phase shifters 216a-216c, and control circuits 218a-218c. In another embodiment, the RF circuits 204 may include a subset of the components illustrated in FIG. 2. As a non-limiting example, the RF circuits 204 may include the power amplifiers 212a-212c, the phase shifters 216a-216c, and the control circuits 218a-218c (e.g., a transmitter-type configuration).

The RF circuits 206 may include similar components as described with respect to RF circuits 204, and the RF circuits 206 may operate in a substantially similar manner as the RF circuits 204. For example, the RF circuits 206 may include power amplifiers, low noise amplifiers, phase shifters, control circuits, or any combination thereof. Multiple antennas may be coupled to the RF circuits 206 in a similar manner as described with respect to the RF circuits 204.

The RF circuits 204 may be selectively coupled to the signal processing circuitry 208 via a first switch 220, and the RF circuits 206 may be selectively coupled to the signal processing circuitry 208 via a second switch 222. The first switch 220 and the second switch 222 may be controlled by the processor 202. For example, in response to a control signal from the processor 202, the first switch 220 may disable RF circuits 204 (e.g., decouple the first array of antenna elements 204 from the signal processing circuitry 208). In a similar manner, the second switch 222 may disable the RF circuits 206 in response to a control signal from the processor 202. Disabling the RF circuits 204, the RF circuits 206, or any combination thereof, reduces an amount of power consumed at the system 200.

The signal processing circuitry 208 may be configured to process received signals and/or signals to be transmitted. For example, the signal processing circuitry 208 may include a transmission mixer (not shown), a reception mixer (not shown), a transmit variable gain amplifier (not shown), a reception variable gain amplifier (not shown), a digital-to-analog converter (DAC) (not shown), an analog-to-digital convertor (not shown), etc. The signal processing circuitry 208 may include a power adjustment unit (not shown). The power adjustment unit may be responsive to the processor 202 to adjust a transmission rate (e.g., a transmission throughput rate) of data to be transmitted. Reducing the transmission rate of data to be transmitted may reduce an amount of power consumed at the system 200.

The processor 202 may be configured to determine a transmission throughput of an electronic device (e.g., a mobile communications device). The transmission throughput may correspond to a data rate associated with a wireless channel for data transmission at a particular time. For example, a beamforming process may be performed on at least one received signal, or a signal to be transmitted, to determine (e.g., calculate) an error vector magnitude (EVM). Beamforming enables signals at particular angles to constructively interfere with each other while other signals destructively interfere with each other to provide directional signal transmission and/or directional signal reception. EVM may be used as a measure of signal quality, which is a function of noise, interfering signals (e.g., beamforming), non-linear distortion, etc. Thus, the transmission throughput may be a function of the calculated EVM. For example, in an exemplary embodiment, the processor 202 may determine a maximum transmission throughput at which the system 200 may transmit data (e.g., signals) without errors based on the EVM.

The processor 202 may determine whether the transmission throughput based on the EVM exceeds (e.g., is greater than) a threshold throughput. The threshold throughput may correspond to a data rate at which the system 200 should not fall below in order to maintain data integrity. In an exemplary embodiment, the threshold throughput may include a margin that is set to prevent the transmission throughput from falling below an absolute threshold throughput (e.g., a required throughput). Unless otherwise stated, the terms "threshold throughput" and "absolute threshold throughput" may be used interchangeably; however, it should be understood that the threshold throughput may be greater (e.g., have a higher data rate) than the absolute threshold throughput.

In response to a determination that the transmission throughput is less than the threshold throughput, the processor 202 may be configured to selectively enable use of at least one antenna by providing control signals to the RF circuits 204, the RF circuits 206, or any combination thereof. For example, the processor 202 may send control signals to control circuits (e.g., at least one of the control circuits 218a-218c in the RF circuits 204) to turn on one or more power amplifiers 212a-212c (e.g., enable conductivity between the corresponding antenna and the signal processing circuitry 208). Alternatively, or in addition, the processor 202 may be configured to selectively increase an amount of current provided to at least one power amplifier 212a-212c, at least one power amplifier in the RF circuits 206, or any combination thereof. For example, the processor 202 may send control signals to control circuits (e.g., at least one of the control circuits 218a-218c) to increase an amount of current provided to the corresponding power amplifiers 212a-212c. In an exemplary embodiment, an identical code (e.g., control signals) may be provided to each control circuit 218a-218c to increase the current provided to each corresponding power amplifier 212a-212c by a substantially similar amount.

Enabling use of antennas 210a-210c and/or increasing an amount of current provided to the power amplifiers 212a-212c increases the transmission throughput at the expense of increased power consumption. Alternatively, or in addition, the processor 202 may send one or more control signals to the power adjustment unit in the signal processing circuitry 208 to increase the transmission rate of data to be transmitted (e.g., increase the transmission throughput). Increasing the transmission rate of data to be transmitted also increase the transmission throughput at the expense of increase power consumption.

In response to a determination that the transmission throughput exceeds the threshold throughput, the processor 202 may be configured to selectively reduce an amount of current provided to the power amplifiers 212a-212c coupled to the antennas 210a-210c, reduce an amount of current provided to power amplifiers in the RF circuits 206, or any combination thereof. In addition, the processor 202 may be configured to selectively disable at least one antenna coupled to the RF circuits 204, at least one antenna coupled to the RF circuits 206, or any combination thereof.

Reducing the amount of current provided to the power amplifiers 212a-212c and/or disabling use of antennas 210a-210c reduces an amount of power consumed at the system 200. Alternatively, or in addition, the processor 202 may send one or more control signals to the power adjustment unit in the signal processing circuitry 208 to decrease the transmission rate of data to be transmitted (e.g., decrease the transmission throughput). Decreasing the transmission rate of data to be transmitted may also decrease (e.g., reduce) the amount of power consumed at the system 200.

In an exemplary embodiment, the processor 202 may be configured to turn off one of the power amplifiers 212a-212c and to selectively reduce an amount of current provided to the other power amplifiers 212a-212c. For example, the processor 202 may send control signals to the first control circuit 218a to turn off the first power amplifier 212a and may send control signals to the second control circuit 212b to reduce an amount of current provided to the second power amplifier 212b.

The processor 202 may also be configured to selectively disable RF circuits in response to a determination that the transmission throughput exceeds the threshold throughput. For example, the processor 202 may send control signals to the first switch 220 and/or the second switch 222 to decouple RF circuits 204, or RF circuits 206 from the signal processing circuitry 208.

In a particular embodiment, disabling (e.g., turning off) the RF circuits 206 while enabling the RF circuits 204 (e.g., disabling use of approximately half of the radiating elements (antennas) of the system 200) may reduce output power by approximately six decibels (dBs). The bias code provided to the control circuits 218a-218c in the RF circuits 204 may be adjusted (e.g., raised) such that the current provided to the power amplifiers 212a-212c increases the transmission power ratio of the RF circuits 204 by approximately 3 dB. For example, the bias code may be adjusted such that the transmission power ratio of the RF circuits 204 is raised from approximately 4.5 dBm to approximately 7.5 dBm. As a result, a gain associated with the RF circuits 204 may be raised by approximately 1.8 dB. Additionally, baseband signal power may be raised by the difference of the increase in transmission power ratio and the increase in gain (e.g., 3 dB - 1.8 dB = 1.2 dB).

Thus, disabling the RF circuits 206 and increasing current provided to the power amplifiers 212a-212c, as described above, may decrease the output power by approximately 3 dB (e.g., decreased by 6 dB and then increased by 3 dB) without degrading linearity (e.g., without extra signal distortion). Additionally, the beams during the beamforming process may be wider due to fewer radiating elements (antennas). Also, disabling RF circuits 206 may reduce power consumption at the system 200. For example, the power consumed at the system 200 may be reduced by approximately 20 percent.

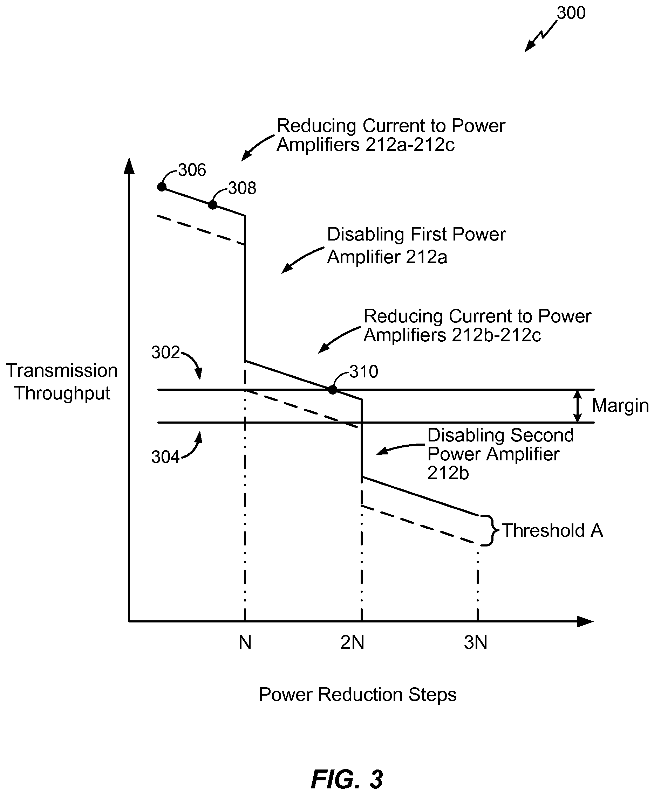

As stated above, the processor 202 may selectively reduce an amount of current provided to at least one of the power amplifiers 212a-212c and may selectively turn off at least one other power amplifier 212a-212c in response to a determination that the transmission throughput exceeds the threshold throughput. These operations will be further described with reference to FIG. 3 along with reference to the system 200 of FIG. 2.

Referring to FIG. 3, a graph 300 illustrating the effects of selectively reducing an amount of current provided to power amplifiers and selectively disabling power amplifiers (e.g., disabling antennas at a transceiver) according to the system of FIG. 2 is shown. It should be understood that the graph 300 is provided for illustrative purposes and should not be construed as limiting. In the particular embodiment, the graph 300 corresponds to a scenario in which the RF circuits 206 are disabled (e.g., decoupled from the signal processing circuitry 208) and the RF circuits 204 are coupled to three antennas.

The horizontal axis of the graph 300 corresponds to power reduction steps. For example, each multiple of N (e.g., N, 2N, and 3N) on the horizontal axis may correspond to an instance where a power amplifier is disabled. The intervals between the multiples of N on the horizontal axis may correspond to instances where the amount of current provided to the power amplifiers 212a-212c is reduced.

The vertical axis of the graph 300 corresponds to the transmission throughput of the system 200. As shown in the graph 300, the threshold throughput 302 is separated from the absolute threshold throughput 304 by a margin. In a particular embodiment, the margin may be set to prevent a reduction in the amount of current provided to the power amplifiers (e.g., the power amplifiers 212a-212c of FIG. 2) from lowering the transmission throughput below the absolute threshold throughput 304.

In response to a determination that the transmission throughput exceeds the threshold throughput 302, the processor 202 of FIG. 2 may reduce the amount of current (e.g., the initial (or first) amount of current) provided to each power amplifier 212a-212c by a particular amount (e.g., an amount specified by decrementing the digital code provided to the control circuits 218a-218c by a single binary value) to provide a second amount of current (e.g., a reduced amount of current) to each power amplifier 212a-212c. For example, in response to a determination that the transmission throughput is at a first level 306, the processor 202 may send control signals (e.g., digital code) to each control circuit 218a-218c, and each control circuit 218a-218c may reduce the amount of current provided to the corresponding power amplifier 212a-212c by the particular amount (e.g., provide the second amount of current to each power amplifier 212a-212c) based on the control signals.

The processor 202 may determine the transmission throughput in response to the second amount of current being provided to each power amplifier 212a-212c. A beamforming process may be performed to determine the EVM, and the processor 202 may determine whether the transmission throughput based on the EVM exceeds the threshold throughput 302. In response to a determination that the transmission throughput based on the second amount of current exceeds the threshold throughput 302 (e.g., the transmission throughput is at a second level 308), the processor 202 may determine whether the second amount of current is greater than a threshold amount of current.

For example, the amount of current provided to the power amplifiers 212a-212c is reduced as the digital code provided to the control circuits 218a-218c is decreased. When the digital code reaches a minimum value, the processor 202 may determine that the amount of current provided to the power amplifiers 212a-212c is not greater than a threshold amount of current. If the second amount of current is greater than the threshold amount of current, the processor 202 may send control signals (e.g., digital code) to each control circuit 218a-218c, and each control circuit 218a-218c may reduce the second amount of current provided to the corresponding power amplifier 212a-212c to provide a third amount of current (e.g., a reduced amount of current) to the power amplifiers 212a-212c.

In a particular embodiment, if the second amount of current results in a lower transmission throughput than the threshold throughput 302, the processor 202 may cease transmission of control signals to reduce the current and/or to disable power amplifiers. Alternatively, if the second amount of current results in a transmission throughput that is greater than the threshold throughput 302 and the second amount of current is not greater than the threshold amount of current, the processor 202 may determine whether use of at least two antennas in the first array of antenna elements 204 is enabled (e.g., coupled to the signal processing circuitry 208). For example, if use of at least two antennas in the first array of antenna elements 204 are enabled, the processor 202 may disable at least one power amplifier in the RF circuits 204. For example, the processor 202 may send one or more control signals to the first control circuit 218a to disable the first power amplifier 212a. As shown in FIG. 3, disabling the first antenna 210a may cause the transmission throughput to be reduced at an accelerated rate (e.g., jump down), while reducing the amount of current provided to the power amplifiers 212a-212c may cause a gradual reduction in the transmission throughput.

Prior to disabling the at least one power amplifier in the RF circuits 204, the processor 202 may determine whether the transmission throughput will fall below the threshold throughput 302 in response to disabling the power amplifier. For example, the processor 202 may subtract a transmission throughput buffer value (e.g., "Threshold A" in FIG. 3) from the transmission throughput to generate a safeguard throughput value. The safeguard throughput value is illustrated by the dotted line in FIG. 3. The processor 202 may compare the safeguard throughput value to the threshold throughput 302. If the threshold throughput 302 is greater than the safeguard throughput value, the processor 202 may determine that the transmission throughput will fall below the threshold throughput 302 in response to disabling the power amplifier.

After the first power amplifier is disabled, the processor 202 may determine the transmission throughput (e.g., perform the beamforming process and determine the transmission throughput based on the calculated EVM). If the transmission throughput is greater than the threshold throughput 302, the processor may reset the digital code provided to the second and third control circuits 218b, 218c and may selectively reduce the amount of current provided to the second and third power amplifiers 212b, 212c in a substantially similar manner as described above. For example, the amount of current provided to the second and third power amplifiers 212b, 212c may be incrementally reduced until the transmission throughput is approximately equal to the threshold throughput 302 (e.g., the transmission throughput is at a third level 310). It will be appreciated that if the transmission throughput falls below the threshold throughput 302, the margin between the threshold throughput 302 and the absolute threshold throughput 304 may prevent the transmission throughput from falling below the absolute threshold throughput 304.

The processor 202 may dynamically adjust (e.g., reduce) the amount of power consumed (e.g., the processor 202 may selectively reduce an amount of current provided to the power amplifiers 212a-212c and/or selectively disable at least one of the power amplifiers 212a-212c) when the transmission throughput is greater than the threshold throughput 302 as long as a signal-to-noise ratio (SNR) is satisfied at a receiver side of the system 200. For example, disabling one or more of the power amplifiers 212a-212c may reduce the SNR of signals received via the antennas 210a-210c and processed (e.g., amplified) by the low noise amplifiers 214a-214c. Thus, in a particular embodiment, the SNR of the received signals may also be factored into a determination of whether to disable at least one of the power amplifiers 212a-212c to reduce the amount of power consumed at the system 200.

The system 200 of FIG. 2 may reduce an amount of power consumed at a transceiver when the transmission throughput is greater than the threshold throughput 302. For example, when the system 200 is operating in a high throughput mode (e.g., the transmission throughput is approximately 4 gigabits per second (Gbps)) and when a low throughput data rate (e.g., a threshold throughput 302 of 500 megabits per second (Mbps) would be satisfactory, the processor 202 may selectively reduce an amount of current provided to the power amplifiers 212a-212c and/or selectively disable at least one of the power amplifiers 212a-212c to reduce power consumption.

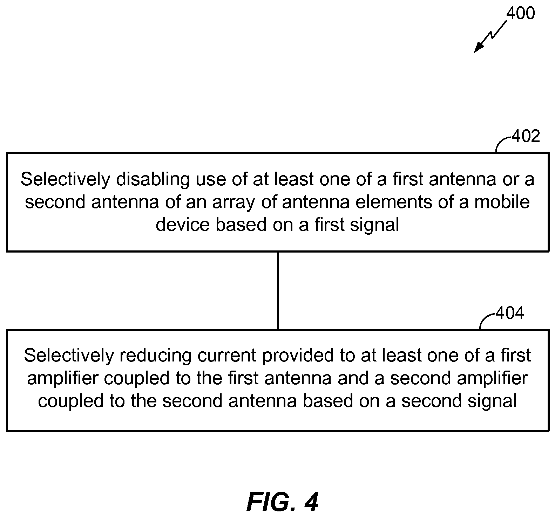

Referring to FIG. 4, a flowchart that illustrates an exemplary embodiment of a method 400 for reducing power consumption at a transceiver is shown. The method 400 may be performed by the wireless device 110 of FIG. 1, the system 200 of FIG. 2, or any combination thereof.

The method 400 includes selectively disabling use of at least one of a first antenna or a second antenna of an array of antenna elements of a mobile device based on a first signal, at 402. For example, referring to FIG. 2, the processor 202 may compare the transmission throughput of the mobile device (e.g., the wireless device 110 of FIG. 1) to a threshold (e.g., the threshold throughput 302). The processor 202 may send control signals (e.g., a first signal) to the first control circuit 218a (e.g., the first bias register) or to the second control circuit 218b (e.g., the second bias register) in response to a determination that the transmission throughput exceeds the threshold throughput 302. According to a first embodiment, the first control circuit 218a may disable use of the first antenna 210a based on the first signal by turning off power to the first power amplifier 212a. Disabling use of the first antenna 210a may also include disabling the first low noise amplifier 214a. According to a second embodiment, the second control circuit 218b may disable use of the second antenna 210b based on the first signal by turning off power to the second power amplifier 212b. Disabling use of the second antenna 210b may also include disabling the second low noise amplifier 214b.

The method 400 may also include selectively reducing current provided to at least one of a first amplifier coupled to the first antenna and a second amplifier coupled to the second antenna based on a second signal. For example, referring to FIG. 2, the processor 202 may send control signals (e.g., a second signal) to the first control circuit 218a or to the second control circuit 218b in response to the determination that the transmission throughput exceeds the threshold throughput 302. According to the first embodiment, the second control circuit 218b may reduce an amount of current provided to the second power amplifier 212b based on the second signal. According to the second embodiment, the first control circuit 218a may reduce an amount of current provided to the first power amplifier 212a based on the second signal.

In a particular embodiment, the method 400 may include alternating between current reduction using the second signal and reducing a number of active antennas using the first signal until the transmission throughput falls below the threshold. For example, referring to FIGs. 2-3, the processor 202 may alternate between sending control signals to the power amplifiers 212a-212c to gradually reduce the transmission throughput from the first level 306 to the second level 308 (e.g., current reduction) and reducing the number of active antennas (e.g., disabling the first antenna 210a).

In a particular embodiment, the method 400 may include disabling use of at least one antenna of a second array of antenna elements of the mobile device. For example, referring to FIG. 2, the processor 202 may send control signals to a power amplifier in the RF circuits 206 to disable a corresponding antenna coupled to the power amplifier.

The method 400 of FIG. 4 may reduce an amount of power consumed at a transceiver when the transmission throughput is greater than a threshold throughput. For example, when the system 200 is operating in a high throughput mode (e.g., the transmission throughput is approximately 4 Gbps) and when a low throughput data rate (e.g., a threshold throughput 302 of 500 Mbps) would be satisfactory, the processor 202 may selectively reduce an amount of current provided to the power amplifiers 212a-212c and/or selectively disable at least one of the power amplifiers 212a-212c to reduce power consumption.

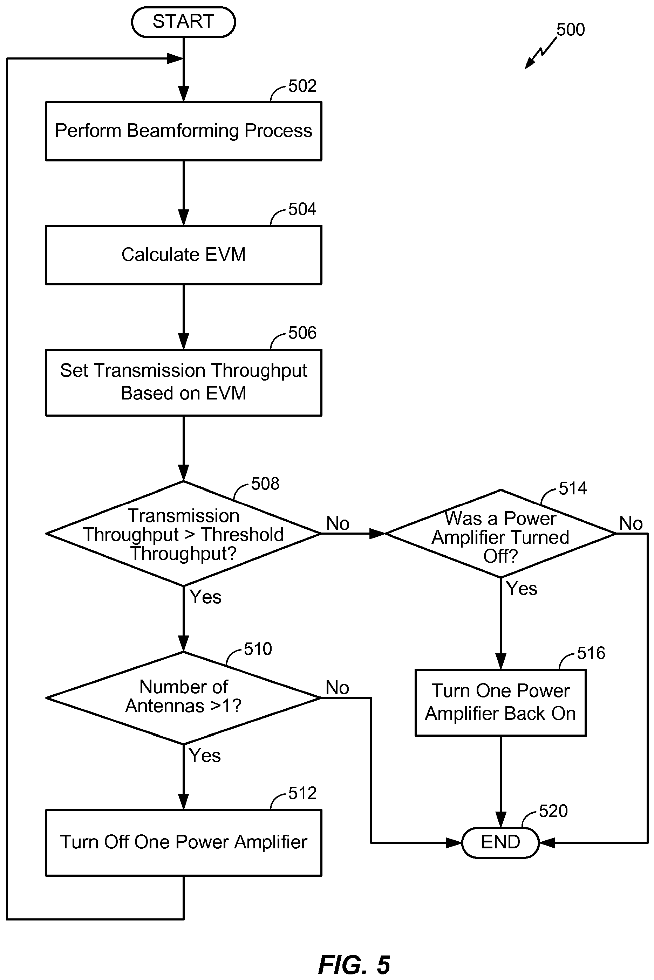

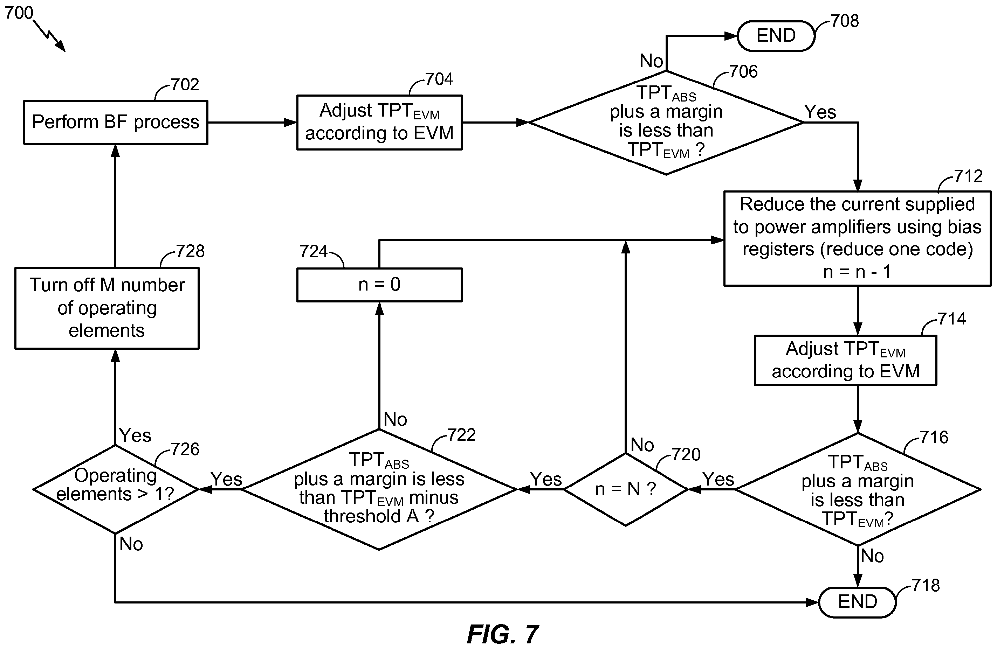

Referring to FIG. 5, a flowchart that illustrates an exemplary embodiment of a method 500 for reducing power consumption at a transceiver based on disabling power amplifiers is shown. The method 500 may enable corrective action for falling below the threshold throughput and may be incorporated within the method 400 of FIG. 4, the method 700 of FIG. 7 (as described below), or any combination thereof. The method 500 may be performed by the wireless device 110 of FIG. 1, the system 200 of FIG. 2, or any combination thereof.

The method 500 includes performing a beamforming process, at 502. For example, referring to FIG. 2, the signals at particular angles may constructively interfere with each other while other signals destructively interfere with each other to provide directional signal transmission and/or directional signal reception. For example, signals received via the antennas 210a-210c may constructively and/or destructively interfere with each other to provide directional signal reception. An error vector magnitude (EVM) may be calculated, at 504. For example, referring to FIG. 2, the processor 202 may determine (e.g., calculate) the EVM based on a beamforming process. A transmission throughput may be set based on the EVM, at 506. For example, referring to FIG. 2, the processor 202 may determine the transmission throughput based on the calculated EVM. For example, the processor 202 may determine a maximum transmission throughput at which the system 200 may transmit data (e.g., signals) without errors based on the EVM.

The processor 202 may determine whether the transmission throughput is greater than the threshold throughput 302, at 508. If the transmission throughput is greater than the threshold throughput 302, the processor 202 may determine whether the number of enabled antennas 210a-210c is greater than one, at 510. If the number of enabled antennas 210a-210c is not greater than one, the processor 202 does not perform power consumption reduction techniques and the process ends, at 520.

If the number of enabled antennas 210a-210c is greater than one, the processor 202 may turn off one power amplifier in the RF circuits 204, at 512. For example, the processor 202 may send one or more control signals to the first control circuit 218a to disable the first power amplifier 212a. After the turning off the first power amplifier 212a, the method may return back to stage 502.

If the transmission throughput is not greater than the threshold throughput, at 508, the processor 202 may determine whether one of the power amplifiers 212a-212c is turned off, at 514. If all of the power amplifiers 212a-212c are enabled, the processor 202 does not perform power consumption reduction techniques and the process ends, at 520. If a power amplifier 212a-212c is turned off, the processor 202 may turn on the disabled power amplifier 212a-212c, at 516. For example, the processor 202 may send one or more control signals to the first control circuit 218a to enable the first power amplifier 212a (e.g., enable data transmission via the first antenna 210a), at 516, in response to a determination that the first power amplifier 212a is disabled.

The method 500 of FIG. 5 may enable corrective action for "undershooting" (e.g., falling below) the threshold throughput. For example, the method 500 may enable the processor 202 to turn on at least one power amplifier in response to a determination that the threshold throughput is greater than the transmission throughput. In other particular embodiments, additional power amplifiers may be enabled in response to a determination that the threshold throughput is greater than the transmission throughput. For example, the second power amplifier 212b may also be enabled to improve (e.g., increase) the transmission throughput in response to a determination that the threshold throughput is greater than the transmission throughput.

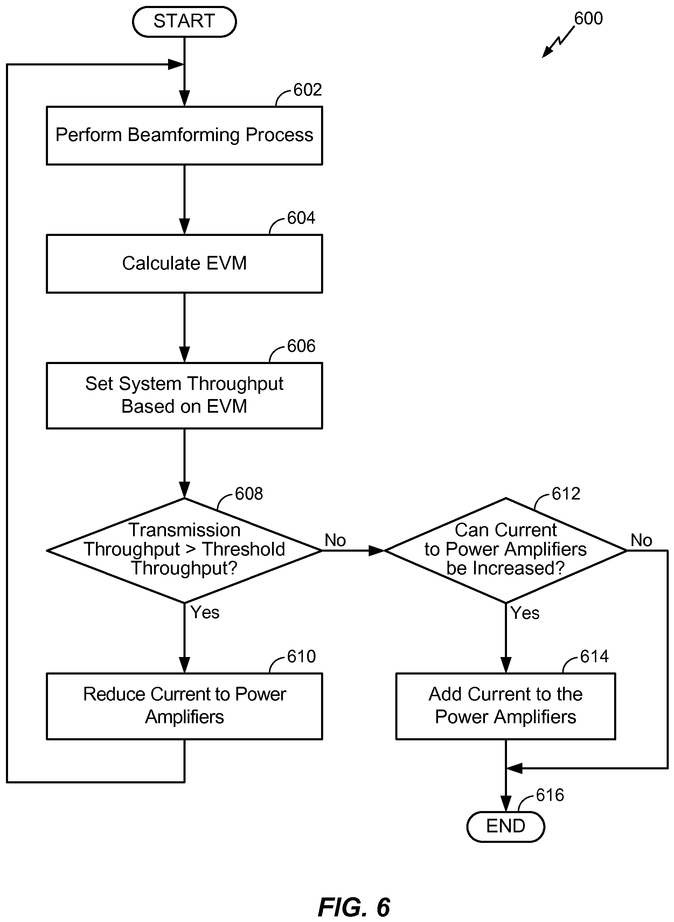

Referring to FIG. 6, a flowchart that illustrates an exemplary embodiment of a method 600 for reducing power consumption at a transceiver based on reducing current provided to power amplifiers is shown. The method 600 may take additional corrective action in response to falling below the threshold throughput and may be incorporated within the method 400 of FIG. 4, the method 500 of FIG. 5, the method 700 of FIG. 7 (as described below) or any combination thereof. The method 600 may be performed by the wireless device 110 of FIG. 1, the system 200 of FIG. 2, or any combination thereof.

The method 600 includes performing a beamforming process, at 602. For example, referring to FIG. 2, signals at particular angles may constructively interfere with each other while other signals destructively interfere with each other to provide directional signal transmission and/or directional signal reception. For example, signals received via the antennas 210a-210c may constructively and/or destructively interfere with each other to provide directional signal reception. An error vector magnitude (EVM) may be calculated, at 604. For example, referring to FIG. 2, the processor 202 may determine (e.g., calculate) the EVM based on the beamforming process. A transmission throughput may be set based on the EVM, at 606. For example, referring to FIG. 2, the processor 202 may determine the transmission throughput based on the calculated EVM. For example, the processor 202 may determine a maximum transmission throughput at which the system 200 may transmit data (e.g., signals) without errors based on the EVM.

The processor 202 may determine whether the transmission throughput is greater than the threshold throughput 302, at 608. If the transmission throughput is greater than the threshold throughput 302, the processor 202 may reduce the current provided to the power amplifiers 212a-212c, at 610. For example, the processor 202 may send control signals (e.g., digital code) to each control circuit 218a-218c, and each control circuit 218a-218c may reduce the amount of current provided to the corresponding power amplifier 212a-212c (e.g., provide a reduced amount of current to each power amplifier 212a-212c). After reducing the current provided to the power amplifiers 212a-212c, the method 600 may return to stage 602.

If the transmission throughput is not greater than the threshold throughput, the processor 202 may determine whether the current applied to the power amplifiers 212a-212c can be increased, at 612. For example, the processor 202 may determine whether the digital code (n) corresponds to an initialization value (n=0) (e.g., a value corresponding to a maximum amount of current being provided to the power amplifiers 212a-212c). In response to a determination that the digital code (n) corresponds to the initialization value (e.g., current provided to the power amplifiers 212a-212c cannot be increased), the process ends, at 616. In response to a determination that the digital code (n) does not correspond to the initialization value, the processor 202 may add current to the power amplifiers 212a-212c, at 614. For example, the processor 202 may send control signals (e.g., digital code) to each control circuit 218a-218c, and each control circuit 218a-218c may increase the amount of current provided to the corresponding power amplifier 212a-212c to improve (e.g., increase) the transmission throughput.

The method 600 of FIG. 6 may enable corrective action for "undershooting" (e.g., falling below) the threshold throughput. For example, the method 600 may enable the processor 202 to increase an amount of current provided to the power amplifiers 212a-212c in response to a determination that the threshold throughput is greater than the transmission throughput. Increasing the amount of current provided to the power amplifiers 212a-212c may cause the transmission throughput to gradually increase.

Referring to FIG. 7, a flowchart that illustrates another exemplary embodiment of a method 700 for reducing power consumption at a transceiver is shown. The method 700 may be performed by the wireless device 110 of FIG. 1, the system 200 of FIG. 2, or any combination thereof.

The method 700 may include performing a beamforming process, at 702. For example, referring to FIG. 2, signals at particular angles may constructively interfere with each other while other signals destructively interfere with each other to provide directional signal transmission and/or directional signal reception. For example, signals received via the antennas 210a-210c may constructively and/or destructively interfere with each other to provide directional signal reception. A transmission throughput according to an error vector magnitude (EVM) may be adjusted, at 704. For example, referring to FIG. 2, the processor 202, or another processor, may determine (e.g., calculate) the EVM. The transmission throughput of the system 200 may be adjusted based on the calculated EVM. For example, the processor 202 may determine a maximum transmission throughput at which the system 200 may transmit data (e.g., signals) without errors based on the EVM.

At 706, the processor 202 may determine whether the threshold throughput 302 (e.g., the absolute threshold throughput 304 plus the margin) is less than the transmission throughput. In response to a determination that the threshold throughput 302 is not less than the transmission throughput, the processor 202 does not perform power consumption reduction techniques and the process ends, at 708. In response to a determination that the threshold throughput is less than the transmission throughput, the processor 202 may reduce the current supplied to the power amplifiers 212a-212c using the control circuits 218a-218c, at 712. For example, the processor 202 may reduce the amount of current provided to each power amplifier 212a-212c to provide a reduced amount of current to each power amplifier 212a-212c. With respect to FIG. 3, in response to a determination that the transmission throughput is at the first level 306, the processor 202 may send control signals (e.g., digital code) to each control circuit 218a-218c, and each control circuit 218a-218c may reduce the amount of current provided to the corresponding power amplifier 212a-212c based on the control signals. Thus, the amount of current provided to the power amplifiers 212a-212c may be based on the digital code (n) provided to the control circuits 218a-218c. For example, each time the value of the digital code (n) decreases (e.g., n = n - 1), the amount of current provided to the power amplifiers 212a-212c may be reduced by a uniform amount. As a non-limiting example, each time the digital code (n) decreases, the amount of current provided to the power amplifiers 212a-212c may be reduced by 20 milliamperes (mAs).

The transmission throughput may be adjusted based on the reduced current being provided to the power amplifiers 212a-212c, at 714. For example, the processor 202 may determine the transmission throughput in response to the second amount of current being provided to each power amplifier 212a-212c. The processor 202 may determine whether the threshold throughput 302 is less than the transmission throughput based on the new EVM, at 716.

In response to a determination that the threshold throughput 302 is not less than the transmission throughput based on the new EVM, the processor 202 does not perform additional power consumption reduction techniques and the process ends, at 718. As explained with respect to FIG. 5, in a particular embodiment, one or more power amplifiers 212a-212c may be turned back on in response to the determination that the threshold throughput 302 is not less than the transmission throughput. In response to a determination that the threshold throughput 302 is less than the transmission throughput based on the new EVM, the processor 202 determines whether the digital code (n) has reached a minimum value (N) (e.g., determine whether the current provided to the power amplifiers 212a-212c can be further reduced), at 720. If the digital code (n) has not reached the minimum value (N), the method 700 may return to stage 712.

If the digital code (n) has reached the minimum value (N), the processor 202 may determine whether the threshold throughput is less than the transmission throughput based on the new EVM minus the transmission throughput buffer value (e.g., "Threshold A" of FIG. 3), at 722. If the threshold throughput is not less than the transmission throughput based on the new EVM minus the transmission throughput buffer value, the digital code (n) is initialized (e.g., n = 0), at 724, and the method 700 returns to 712. If the threshold throughput is less than the transmission throughput based on the new EVM minus the transmission throughput buffer value, the processor 202 may determine whether the number of operating elements (e.g., power amplifiers) is greater than one, at 726. For example, the processor 202 may determine whether at least two of the power amplifiers 212a-212c are enabled.

In response to a determination that the number of operating elements is not greater than one, the processor 202 does not perform additional power consumption reduction techniques and the process ends, at 718. In response to a determination that the number of operating elements is greater than one, the processor 202 may turn off a particular number (M) of operating elements, at 728, and return to 702. For example, the processor 202 may send one or more control signals to the first control circuit 218a to disable the first power amplifier 212a (e.g., M=1). As shown in FIG. 3, disabling the first power amplifier 212a may cause a substantial reduction in the transmission throughput. As another example, the processor 202 may send one or more control signals to the first control circuit 218a and to the second control circuit 218b to disable the first power amplifier 212a and the second power amplifier 212b, respectively (e.g., M=2).

The method 700 of FIG. 7 may reduce an amount of power consumed at a transceiver when the transmission throughput is greater than the threshold throughput 302. For example, when the system 200 is operating in a high throughput mode (e.g., the transmission throughput is approximately 4 Gbps) and when a low throughput data rate (e.g., a threshold throughput 302 of 500 Mbps) would be satisfactory, the processor 202 may selectively reduce an amount of current provided to the power amplifiers 212a-212c and/or selectively disable at least one of the power amplifiers 212a-212c to reduce power consumption.

In conjunction with the described embodiments, an apparatus includes first means for amplifying a first input signal. The first means for amplifying may be configured to be coupled to a first antenna or an array of antenna elements of a mobile device. For example, the first means for amplifying may include the first power amplifier 212a of FIG. 2, the second power amplifier 212b of FIG. 2, the N^{th} power amplifier 212c of FIG. 2, one or more other devices, circuits, modules, or any combination thereof.

The apparatus also include second means for amplifying a second input signal. The second means for amplifying may be configured to be coupled to a second antenna of the array of antenna elements. For example, the second means for amplifying may include the first power amplifier 212a of FIG. 2, the second power amplifier 212b of FIG. 2, the N^{th} power amplifier 212c of FIG. 2, one or more other devices, circuits, modules, or any combination thereof.

The apparatus also include means for selectively reducing current provided to one of the first means for amplifying and the second means for amplifying and for selectively disabling the other of the first means for amplifying and the second means for amplifying. For example, the means for selectively reducing current and for selectively disabling may include the first control circuit 218a of FIG. 2, the second control circuit 218b of FIG. 2, the N^{th} control circuit 218c of FIG. 2, one or more other devices, circuits, modules, or any combination thereof.

The apparatus may also include first means for phase shifting coupled to the first means for amplifying. For example, the first means for phase shifting may include the first phase shifter 216a of FIG. 2, the second phase shifter 216b of FIG 2, the N^{th} phase shifter 216c of FIG. 2, one or more other devices, circuits, modules, or any combination thereof.

The apparatus may also include second means for phase shifting coupled to the second means for amplifying. For example, the second means for phase shifting may include the first phase shifter 216a of FIG. 2, the second phase shifter 216b of FIG. 2, the N^{th} phase shifter 216c of FIG. 2, one or more other devices, circuits, modules, or any combination thereof.

The apparatus may also include means for processing coupled to the means for selectively reducing current and for selectively disabling. For example, the means for processing may include the processor 202 of FIG. 2, one or more other devices, circuits, modules, or any combination thereof. The means for processing may be configured to compare a transmission throughput of the mobile device to a threshold and to reduce power consumption via the means for selectively reducing current and for selectively disabling based on the transmission throughput being greater than the threshold.

The apparatus may also include third means for amplifying a third input signal. An input of the third means for amplifying may be configured to be coupled to the first antenna. For example, the third means for amplifying may include the first low noise amplifier 214a of FIG. 2, the second low noise amplifier 214b of FIG. 2, the N^{th} low noise amplifier 214c of FIG. 2, one or more other devices, circuits, modules, or any combination thereof. The third means for amplifying may be coupled to the means for selectively reducing current and for selectively disabling.

The apparatus may also include fourth means for amplifying a fourth input signal. An input of the fourth means for amplifying may be configured to be coupled to the second antenna. For example, the fourth means for amplifying may include the first low noise amplifier 214a of FIG. 2, the second low noise amplifier 214b of FIG. 2, the N^{th} low noise amplifier 214c of FIG. 2, one or more other devices, circuits, modules, or any combination thereof. The fourth means for amplifying may be coupled to the means for selectively reducing current and for selectively disabling.

Those of skill would further appreciate that the various illustrative logical blocks, configurations, modules, circuits, and algorithm steps described in connection with the embodiments disclosed herein may be implemented as electronic hardware, computer software executed by a processor, or combinations of both. Various illustrative components, blocks, configurations, modules, circuits, and steps have been described above generally in terms of their functionality. Whether such functionality is implemented as hardware or processor executable instructions depends upon the particular application and design constraints imposed on the overall system. Skilled artisans may implement the described functionality in varying ways for each particular application, but such implementation decisions should not be interpreted as causing a departure from the scope of the present disclosure.

The steps of a method or algorithm described in connection with the embodiments disclosed herein may be embodied directly in hardware, in a software module executed by a processor, or in a combination of the two. A software module may reside in random access memory (RAM), flash memory, read-only memory (ROM), programmable read-only memory (PROM), erasable programmable read-only memory (EPROM), electrically erasable programmable read-only memory (EEPROM), registers, hard disk, a removable disk, a compact disc read-only memory (CD-ROM), or any other form of non-transient storage medium known in the art. An exemplary storage medium is coupled to the processor such that the processor can read information from, and write information to, the storage medium. In the alternative, the storage medium may be integral to the processor. The processor and the storage medium may reside in an application-specific integrated circuit (ASIC). The ASIC may reside in a computing device or a user terminal. In the alternative, the processor and the storage medium may reside as discrete components in a computing device or user terminal.

## Claims

1. An apparatus comprising:
a first power amplifier (PA1) configured to be coupled to a first antenna (210a) of an array of antenna elements of a mobile device;
a second power amplifier (PA2) configured to be coupled to a second antenna (210b) of the array of antenna elements; and
a first low-noise amplifier (LNA1) configured to be coupled to the first antenna (210a) and a second low-noise amplifier (LNA2) configured to be coupled to the second antenna (210b);
control circuitry (218a, 218b) configured to turn off the second power amplifier and the second low-noise amplifier in response to a determination that a transmission throughput exceeds a threshold;
a first phase shifter (216a) coupled to an input of the first power amplifier (PA1) and to an output of the first low-noise amplifier (LNA1); and
a second phase shifter (216b) coupled to an input of the second power amplifier (PA2) and to an output of the second low-noise amplifier (LNA2), wherein the second phase shifter (216b) is separate from the first phase shifter (216a).

2. The apparatus of claim 1, wherein the control circuitry (218a, 218b) comprises a first bias register coupled to the first power amplifier (PA1) and a second bias register coupled to the second power amplifier (PA2), and wherein the first bias register and the second bias register are coupled to a processor (202) via a control signal path.

3. The apparatus of claim 1, further comprising at least one amplifier configured to be coupled to an antenna in a second array of antenna elements of the mobile device, wherein the second array of antenna elements is configured to be selectively disabled.

4. A method comprising:
selectively disabling (402) use of at least one of a first antenna (210a) or a second antenna (210b) of an array of antenna elements of a mobile device in response to a determination that a transmission throughput exceeds a threshold;
selectively reducing (404) current provided to at least one of a first power amplifier (PA1) coupled to the first antenna (210a) and a second power amplifier (PA2) coupled to the second antenna (210b) in response to the determination that the transmission throughput exceeds the threshold; and
steering a corresponding beam in a beam-forming operation using a first phase shifter (216a) coupled to an input of the first power amplifier (PA1) and to an output of a first low-noise amplifier (LNA1), and a second phase shifter (216b) coupled to an input of the second power amplifier (PA2) and to an output of a second low-noise amplifier (LNA2), wherein the second phase shifter (216b) is separate from the first phase shifter (216a);
wherein selectively disabling the use of at least one of the first antenna (210a) or the second antenna (210b) includes selectively disabling a corresponding one of the first low-noise amplifier (LNA1) coupled to the first antenna (210a) and the second low-noise amplifier (LNA2) coupled to the second antenna (210b).

5. The method of claim 4, further comprising receiving at least one signal while the transmission throughput is greater than the threshold, wherein the transmission throughput relates to a transmission data rate of the mobile device.

6. The method of claim 5, further comprising performing at least one of current reduction using the at least one signal and reducing a number of active antennas (210a, 210b) using the at least one signal until the transmission data rate falls below the threshold.

7. The method of claim 4, further comprising disabling use of at least one antenna of a second array of antenna elements of the mobile device.

8. The apparatus of claim 1, wherein the control circuitry (218a, 218b) is further configured to receive a control signal and to turn off one of the first and second power amplifiers (PA1, PA2) based on the control signal while the other of the first and second amplifiers remains active, and wherein the control signal is indicative of whether the transmission throughput exceeds the threshold.

9. The apparatus of claim 1, wherein the transmission throughput relates to a transmission throughput of the mobile device or a signal to noise ratio of the mobile device.

10. The apparatus of claim 1, wherein the control circuitry (218a, 218b) is configured to turn off the one of the first and the second power amplifiers (PA1, PA2) based further on a signal-to-noise ratio, SNR, condition of a receiver of the mobile device.

11. The apparatus of claim 1, wherein the threshold is based on an error vector magnitude, EVM, of a received signal or a signal to be transmitted.

## Patentansprüche

1. Eine Vorrichtung, die Folgendes aufweist:
einen ersten Leistungsverstärker (PA1), der konfiguriert ist an eine erste Antenne (210a) einer Anordnung von Antennenelementen einer Mobileinrichtung gekoppelt zu werden;
einen zweiten Leistungsverstärker (PA2), der konfiguriert ist an eine zweite Antenne (210b) der Anordnung von Antennenelementen gekoppelt zu werden; und
einen ersten rauscharmen Verstärker (LNA1), der konfiguriert ist an die erste Antenne (210a) gekoppelt zu werden, und einen zweiten rauscharmen Verstärker (LNA2), der konfiguriert ist an die zweite Antenne (210b) gekoppelt zu werden;
Steuerschaltkreise (218a, 218b), die konfiguriert sind den zweiten Leistungsverstärker und den zweiten rauscharmen Verstärker abzuschalten ansprechend auf eine Bestimmung, dass ein Sendungsdurchsatz einen Schwellenwert überschreitet;
ein erstes Phasenverschiebungselement (216a), das an einen Eingang des ersten Leistungsverstärkers (PA1) und an einen Ausgang des ersten rauscharmen Verstärkers (LNA1) gekoppelt ist; und
ein zweites Phasenverschiebungselement (216b), das an einen Eingang des zweiten Leistungsverstärkers (PA2) und an einen Ausgang des zweiten rauscharmen Verstärkers (LNA2) gekoppelt ist, wobei das zweite Phasenverschiebungselement (216b) separat von dem ersten Phasenverschiebungselement (216a) ist.

2. Vorrichtung nach Anspruch 1, wobei die Steuerschaltkreise (218a, 218b) ein erstes Vorspannungs- bzw. Bias-Register, das an den ersten Leistungsverstärker (PA1) gekoppelt ist, und ein zweites Bias-Register, das an den zweiten Leistungsverstärker (PA2) gekoppelt ist, aufweisen, und wobei das erste Bias-Registern und das zweite Bias-Register an einen Prozessor (202) über einen Steuersignalpfad gekoppelt sind.

3. Vorrichtung nach Anspruch 1, die weiter wenigstens einen Verstärker aufweist, der konfiguriert ist an eine Antenne in einer zweiten Anordnung von Antennenelementen der Mobileinrichtung gekoppelt zu werden, wobei die zweite Anordnung von Antennenelementen konfiguriert ist selektiv deaktiviert zu werden.

4. Ein Verfahren, das Folgendes aufweist:
selektives Deaktivieren (402) einer Nutzung von wenigstens einem von einer ersten Antenne (210a) oder einer zweiten Antenne (210b) einer Anordnung von Antennenelementen einer Mobileinrichtung ansprechend auf eine Bestimmung, dass ein Sendedurchsatz einen Schwellenwert überschreitet;
selektives Reduzieren (404) von Strom, der an wenigstens eines von einem ersten Leistungsverstärker (PA1), der an die erste Antenne (210a) gekoppelt ist, und einem zweiten Leistungsverstärker (PA2), der an die zweite Antenne (210b) gekoppelt ist, vorgesehen wird ansprechend auf die Bestimmung, dass der Sendedurchsatz einen Schwellenwert überschreitet; und
Steuern eines entsprechenden Beams bzw. Strahls in einer Beamforming- bzw. Strahlformungsoperation unter Nutzung eines ersten Phasenverschiebungselementes (216a), das an einen Eingang des ersten Leistungsverstärkers (PA1) und an einen Ausgang eines ersten rauscharmen Verstärkers (LNA1) gekoppelt ist, und eines zweiten Phasenverschiebungselementes (216b), das an einen Eingang des zweiten Leistungsverstärkers (PA2) und an einen Ausgang eines zweiten rauscharmen Verstärkers (LNA2) gekoppelt ist, wobei das zweite Phasenverschiebungselement (216b) separat zu dem ersten Phasenverschiebungselement (216a) ist;
wobei selektives Deaktivieren der Nutzung von wenigstens einem von der ersten Antenne (210a) oder der zweiten Antenne (210b) selektives Deaktivieren eines entsprechenden einen von dem ersten rauscharmen Verstärker (LNA1), der an die erste Antenne (210a) gekoppelt ist, und dem zweiten rauscharmen Verstärker (LNA2), der eine zweite Antenne (210b) gekoppelt ist, aufweist.

5. Verfahren nach Anspruch 4, das weiter Empfangen wenigstens eines Signals aufweist, während der Sendedurchsatz größer als der Schwellenwert ist, wobei der Sendedurchsatz zu einer Sendedatenrate der Mobileinrichtung in Beziehung steht.

6. Verfahren nach Anspruch 5, das weiter Durchführen von wenigstens einem von einer Stromverringerung unter Nutzung des wenigstens einen Signals und Verringern einer Anzahl aktiver Antennen (210a, 210b) unter Nutzung des wenigstens einen Signals aufweist, bis die Sendedatenrate unter den Schwellenwert fällt.

7. Verfahren nach Anspruch 4, das weiter Deaktivieren einer Nutzung wenigstens einer Antenne einer zweiten Anordnung von Antennenelementen der Mobileinrichtung aufweist.

8. Vorrichtung nach Anspruch 1, wobei die Steuerschaltkreise (218a, 218b) weiter konfiguriert sind zum Empfangen eines Steuersignals und zum Abschalten von einem der ersten und zweiten Leistungsverstärker (PA1, PA2) basierend auf dem Steuersignal, während der andere von den ersten und zweiten Leistungsverstärkern aktiv bleibt, und wobei das Steuersignal anzeigt, ob der Sendedurchsatz den Schwellenwert überschreitet.

9. Vorrichtung nach Anspruch 1, wobei der Sendedurchsatz zu einem Sendedurchsatz der Mobileinrichtung oder einem Signal-Rauschen-Verhältnis der Mobileinrichtung in Beziehung steht.

10. Vorrichtung nach Anspruch 1, wobei die Steuerschaltkreise (218a, 218b) konfiguriert sind zum Abschalten des einen der ersten und zweiten Leistungsverstärker (PA1, PA2) basierend weiter auf einer Signal-Rauschen-Verhältnis- bzw. SNR-Bedingung (SNR = signal-to-noise ratio) eines Empfängers der Mobileinrichtung.

11. Vorrichtung nach Anspruch 1, wobei der Schwellenwert auf einem Fehlervektorbetrag bzw. EVM (EVM = error vector magnitude) eines empfangenen Signals oder eines Signals, das gesendet werden soll, basiert.

## Revendications

1. Appareil comprenant :
un premier amplificateur de puissance (PA1) configuré pour être relié à une première antenne (210a) d'un réseau d'éléments d'antenne d'un dispositif mobile ;
un deuxième amplificateur de puissance (PA2) configuré pour être relié à une deuxième antenne (210b) du réseau d'éléments d'antenne ; et
un premier amplificateur à faible bruit (LNA1) configuré pour être relié à la première antenne (210a) et un deuxième amplificateur à faible bruit (LNA2) configuré pour être relié à la deuxième antenne (210b) ;
un circuit de commande (218a, 218b) configuré pour désactiver le deuxième amplificateur de puissance et le deuxième amplificateur à faible bruit en réponse à une détermination selon laquelle un débit d'émission dépasse un seuil ;
un premier déphaseur (216a) relié à une entrée du premier amplificateur de puissance (PA1) et à une sortie du premier amplificateur à faible bruit (LNA1) ; et
un deuxième déphaseur (216b) relié à une entrée du deuxième amplificateur de puissance (PA2) et à une sortie du deuxième amplificateur à faible bruit (LNA2), dans lequel le deuxième déphaseur (216b) est distinct du premier déphaseur (216a).

2. Appareil selon la revendication 1, dans lequel le circuit de commande (218a, 218b) comprend un premier registre de polarisation relié au premier amplificateur de puissance (PA1) et un deuxième registre de polarisation relié au deuxième amplificateur de puissance (PA2), et dans lequel le premier registre de polarisation et le deuxième registre de polarisation sont reliés à un processeur (2202) relié par l'intermédiaire d'un trajet de signal de commande.

3. Appareil selon la revendication 1, comprenant en outre au moins un amplificateur configuré pour être relié à une antenne dans deuxième réseau d'éléments d'antenne du dispositif mobile, dans lequel le deuxième réseau d'éléments d'antenne est configuré pour être désactivé sélectivement.

4. Procédé comprenant :
la désactivation sélective (402) de l'utilisation d'au moins une parmi une première antenne (210a) ou une deuxième antenne (210b) d'un réseau d'éléments d'antenne d'un dispositif mobile en réponse à une détermination selon laquelle un débit d'émission dépasse un seuil ;
la réduction sélective (404) du courant fourni à au moins un parmi un premier amplificateur de puissance (PA1) relié à la première antenne (210a) et un deuxième amplificateur de puissance (PA2) relié à la deuxième antenne (210b) en réponse à la détermination selon laquelle un débit d'émission dépasse le seuil ; et
la commande d'un faisceau correspondant dans un fonctionnement de formation de faisceau en utilisant un premier déphaseur (216a) relié à une entrée du premier amplificateur de puissance (PA1) et à une sortie du premier amplificateur à faible bruit (LNA1) et un deuxième déphaseur (216b) relié à une entrée du deuxième amplificateur de puissance (PA2) et à une sortie d'un deuxième amplificateur à faible bruit (LNA2), dans lequel le deuxième déphaseur (216b) est distinct du premier déphaseur (216a) ;
dans lequel la désactivation sélective de l'utilisation d'au moins l'une parmi la première antenne (210a) ou la deuxième antenne (210b) comporte la désactivation sélective d'un correspondant parmi le premier amplificateur à faible bruit (LNA1) relié à la première antenne (210a) et le deuxième amplificateur à faible bruit (LNA2) relié à la deuxième antenne (210b).

5. Procédé selon la revendication 4, comprenant en outre la réception d'au moins un signal lorsque le débit d'émission est supérieur au seuil, dans lequel le débit d'émission concerne un débit de données d'émission du dispositif mobile.

6. Procédé selon la revendication 5, comprenant en outre la mise en œuvre d'au moins une réduction de courant en utilisant l'au moins un signal et la réduction d'un nombre d'antennes actives (210a, 210b) en utilisant l'au moins un signal jusqu'à ce que le débit de données d'émission chute en dessous du seuil.

7. Procédé selon la revendication 4, comprenant en outre la désactivation de l'utilisation d'au moins une antenne d'un deuxième réseau d'éléments d'antenne du dispositif mobile.

8. Appareil selon la revendication 1, dans lequel le circuit de commande (218a, 218b) est configuré en outre pour recevoir un signal de commande et pour désactiver un parmi les premier et deuxième amplificateurs de puissance (PA1, PA2) sur la base du signal de commande alors que l'autre parmi les premier et deuxième amplificateurs de puissance demeure actif, et dans lequel le signal de commande est indicatif de si le débit d'émission dépasse un seuil.

9. Appareil selon la revendication 1, dans lequel le débit d'émission concerne un débit de données d'émission du dispositif mobile ou un rapport signal sur bruit du dispositif mobile.

10. Appareil selon la revendication 1, dans lequel le circuit de commande (218a, 218b) est configuré pour désactiver celui parmi les premier et deuxième amplificateurs de puissance (PA1, PA2) sur la base en outre d'un état du rapport signal sur bruit du récepteur du dispositif mobile.

11. Appareil selon la revendication 1, dans lequel le seuil est basé sur une amplitude d'un vecteur d'erreur, EVM, d'un signal reçu ou un signal à émettre.
